(19) Europäisches Patentamt
European Patent Office
Office européen des brevets

(11) **EP 3 854 509 B1**

(12) **EUROPÄISCHE PATENTSCHRIFT**

(45) Veröffentlichungstag und Bekanntmachung des Hinweises auf die Patenterteilung:
**07.02.2024 Patentblatt 2024/06**

(21) Anmeldenummer: **20214031.5**

(22) Anmeldetag: **15.12.2020**

(51) Internationale Patentklassifikation (IPC):
***B23K 11/11*** *(2006.01)*     ***B23K 11/08*** *(2006.01)*
***B23K 11/25*** *(2006.01)*     *B23K 101/00* *(2006.01)*
*B23K 101/18* *(2006.01)*

(52) Gemeinsame Patentklassifikation (CPC):
**B23K 11/115; B23K 11/08; B23K 11/253;**
B23K 2101/006; B23K 2101/18

(54) **VORRICHTUNG FÜR EINE SCHWEISSSTEUERUNG UND VERFAHREN ZUR ERZEUGUNG VON KRAFTWERTEN BEI DER STEUERUNG EINES SCHWEISSWERKZEUGS**

WELDING CONTROL DEVICE AND METHOD FOR GENERATING FORCE VALUES IN THE CONTROL OF A WELDING TOOL

DISPOSITIF POUR UNE COMMANDE DE SOUDAGE ET PROCÉDÉ DE GÉNÉRATION DES VALEURS DE FORCE LORS DE LA COMMANDE D'UN OUTIL DE SOUDAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2020 DE 102020200617**

(43) Veröffentlichungstag der Anmeldung:
**28.07.2021 Patentblatt 2021/30**

(73) Patentinhaber: **Robert Bosch GmbH**
**70442 Stuttgart (DE)**

(72) Erfinder: **Stolze, Josephine**
**69412 Eberbach (DE)**

(56) Entgegenhaltungen:
**EP-A1- 3 412 397     DE-A1-102012 000 462**
**JP-A- H1 094 882     JP-A- H11 104 849**
**JP-A- 2001 025 880     US-A1- 2001 045 413**
**US-A1- 2014 054 272**

## Beschreibung

Die vorliegende Erfindung bezieht sich auf eine Vorrichtung für eine Schweißsteuerung und ein Verfahren zur Erzeugung von Kraftwerten bei der Steuerung eines Schweißwerkzeugs.

JP H10 94882 A zeigt eine Schweißpistolendruckerfassung und eine Steuervorrichtung. JP H11 104849 A zeigt eine Schweißsteuervorrichtung eines Punktschweißgeräts. DE 10 2012 000 462 A1 zeigt eine Vorrichtung zur Kraftregulierung beim Widerstandsschweißen. EP 3 412 397 zeigt ein Verfahren, eine Berechnungseinheit zum Voraussagen von Schweißspritzern während eines Widerstandsschweißvorgangs. Es ist jedoch kein Kraftwert-Erzeugungsmodul gezeigt, das ausgestaltet ist, zur Erzeugung einer Ist-Kraft Störgrößen zu berücksichtigen, wie in Anspruch 1 beschrieben.

Metallische Teile können mit einem Schweißwerkzeug verbunden werden. Beispielsweise werden Schweißwerkzeuge in industriellen Anlagen eingesetzt, die insbesondere Fertigungsstraßen für Fahrzeuge usw. sind. Hier werden metallische Teile, insbesondere Bleche, durch Schweißen mit dem Schweißwerkzeug verbunden. Im automatisierten Karosserierohbau wird als Schweißwerkzeug eine Schweißzange mit Elektrodenkappen an Schweißelektroden eingesetzt. Beim Widerstandsschweißen werden die zu verschweißenden Bauteile an der zu verschweißenden Stelle mit zwei Schweißelektroden der Schweißzange zusammengedrückt. Dadurch wird ein Stromkreis gebildet, in welchem mit einem speziellen Stromverlauf zwischen den Bauteilen eine Schweißlinse ausgebildet wird. Beim Punkt-/ Widerstandsschweißen ist eine konstante Qualität der Schweißpunkte sehr wichtig.

Solche Schweißzangen sind beispielsweise als servoelektrische Schweißzangen ausgestaltet, um die Kraft zum Zusammendrücken der Schweißzange zum Bilden des Schweißpunkts aufzubringen. Ist die Kraft zu groß, die in die Schweißzange eingeleitet wird, wird die Schweißzange beschädigt. Daher ist der Einsatz eines Kraftreglers vorteilhaft, um die in die Schweißzange eingeleitete Kraft derart zu dosieren, dass keine Beschädigungen an der Schweißzange bzw. dem Schweißwerkzeug auftreten.

Der Kraftregler verwendet bei der Kraftregelung einen gemessenen Kraftwert oder eine Ist-Kraft. Die Ist-Kraft wird mit einem Kraftsensor gemessen.

Problematisch ist jedoch, dass der Kraftsensor aufwändig einzurichten ist. Außerdem ist der Kraftsensor immer wieder zu warten, um vermeiden zu können, dass der Kraftsensor falsche Ist-Kraftwerte bzw. falsche Werte der Ist-Kraft ausgibt.

Werden falsche Ist-Kraftwerte ausgegeben, so wird bei der Regelung und Überwachung des Betriebs des Schweißwerkzeugs eine falsch gemessene Ist-Kraft verwendet. Dabei kommt es bei einer Kraftregelung des Schweißwerkzeugs, insbesondere einer servolelektrischen Schweißzange, mit falschen Ist-Kraftwerten zur Einstellung falscher Kräfte. Dies kann zu einer schlechten Schweißpunktqualität, wie beispielsweise offene Schweißpunkte, zahlreiche Spritzer, oder dergleichen, und zu Beschädigungen des Schweißwerkzeugs führen.

Daher besteht die Aufgabe der vorliegenden Erfindung darin, eine Vorrichtung für eine Schweißsteuerung und ein Verfahren zur Erzeugung von Kraftwerten bei der Steuerung eines Schweißwerkzeugs bereitzustellen, mit welchen die zuvor genannten Probleme gelöst werden können. Insbesondere sollen eine Vorrichtung für eine Schweißsteuerung und ein Verfahren zur Erzeugung von Kraftwerten bei der Steuerung eines Schweißwerkzeugs bereitgestellt werden, bei welchen für beliebige Schweißwerkzeuge unterschiedlichen Typs, die von der Schweißsteuerung in einer industriellen Anlage gesteuert werden, die erzeugte Kraft derart einstellbar ist, dass eine gleichbleibende Qualität der Schweißverbindungen mit geringem Installations- und Wartungsaufwand sowie hoher Betriebssicherheit und Genauigkeit realisierbar ist.

Diese Aufgabe wird durch eine Vorrichtung für eine Schweißsteuerung nach Anspruch 1 gelöst. Die Vorrichtung hat ein Ermittlungsmodul zur Ermittlung mindestens eines Schweißwerkzeugparameters, der von einem Antrieb des Schweißwerkzeugs relativ zu dem mindestens einen Bauteil bei einem Schweißvorgang mit dem Schweißwerkzeug abhängig ist, und ein Kraftwert-Erzeugungsmodul zur Erzeugung, aus einem von dem Ermittlungsmodul ermittelten Schweißwerkzeugparameter, einer Ist-Kraft, die bei dem Schweißvorgang mit dem Schweißwerkzeug auftritt, wobei das Kraftwert-Erzeugungsmodul ausgestaltet ist, die Ist-Kraft mit einem Modell des Schweißwerkzeugs zu erzeugen, wie in Anspruch 1 beschrieben.

Die zuvor beschriebene Vorrichtung ermöglicht, die Herstellung einer Schweißverbindung in der geforderten hohen Qualität ohne Kraftsensor zu regeln. Dadurch können Ressourcen eingespart werden. Zudem können für die Schweißanlage die Kosten für den Kraftsensor eingespart werden.

Noch dazu entfällt durch den nicht notwendigen Kraftsensor auch der Zeitaufwand für die Inbetriebnahme, die Skalierung und die Wartung des Kraftsensors. Dies bedeutet eine zusätzliche markante Kostenersparnis für die Schweißsteuerung.

Dennoch ermöglicht die Vorrichtung, Beschädigungen an dem Schweißwerkzeug zu vermeiden. Dadurch sind kostenintensive Serviceeinsätze zur Behebung von Störungen der Schweißanlage vermeidbar. In Folge dessen verbessert die Schweißsteuerung die Lebensdauer des Schweißwerkzeugs signifikant.

Insgesamt kann die Vorrichtung sicherstellen, dass die gewünschte Qualität der hergestellten Schweißverbindungen erzielt werden kann. Beispielsweise sind Schweißspritzer und eine daraus resultierende schlechte Schweißpunktqualität unter Kraftregelung bei einem falsch gemessenen, insbesondere zu groß gemessenen, Kraftistwert vermeidbar. Dadurch wird der von einer industriellen Anlage produzierte Ausschuss vermindert.

Insgesamt sind dadurch Ausfälle der Schweißanlage in der industriellen Anlage minimierbar. Dadurch kann letztlich der Ausstoß der industriellen Anlage erhöht werden.

Vorteilhafte weitere Ausgestaltungen der Vorrichtung sind in den abhängigen Patentansprüchen angegeben.

Das Modell modelliert das Schweißwerkzeug als Feder und weist mindestens einen die Feder bestimmenden Parameter auf.

Denkbar ist, dass der mindestens eine Federparameter eine Ersatzfederkonstante ist, die mindestens eine Federkonstante in Bezug auf die mechanischen Eigenschaften des Schweißwerkzeugs und eine Federkonstante in Bezug auf die Eigenschaften des mindestens einen zu schweißenden Bauteils aufweist.

Denkbar ist zusätzlich oder alternativ, dass der mindestens eine Federparameter eine Totzeit ist, die nach Beaufschlagung des Schweißwerkzeugs mit der Kraft den Kraftaufbau zum Herstellen der Schweißverbindung verzögert.

In einer speziellen Ausgestaltung kann das Kraftwert-Erzeugungsmodul ausgestaltet sein, eine Änderung der die Feder bestimmenden Parameter bei einem Schweißvorgang zu berücksichtigen.

Erfindungsgemäß ist der mindestens eine Schweißwerkzeugparameter eine Armaufbiegung des Schweißwerkzeugs, die eine Funktion der Ist-Lage der mindestens einen Elektrode des Schweißwerkzeugs ist. Zusätzlich oder alternativ ist der mindestens eine Schweißwerkzeugparameter ein Beschleunigungsmoment der mindestens einen Elektrode des Schweißwerkzeugs, und das Beschleunigungsmoment ist eine Funktion der Ist-Drehzahl der Antriebseinrichtung zum Antrieb der mindestens einen Elektrode des Schweißwerkzeugs.

Das Kraftwert-Erzeugungsmodul ist ausgestaltet, zur Erzeugung der Ist-Kraft eine Änderung der Kraft zu berücksichtigen, die bei einem Schweißvorgang mit dem Schweißwerkzeug auftritt, wie in Anspruch 1 beschrieben. Die Änderung der Kraft tritt beispielsweise auf aufgrund von Wärmeausdehnung des mindestens einen Bauteils und/oder aufgrund von Einsinken der mindestens einen Elektrode an einer aufgeschmolzenen Stelle in das mindestens eine Bauteil und/oder aufgrund von Schweißspritzern.

Die zuvor beschriebene Vorrichtung kann Teil einer Schweißsteuerung für ein Schweißwerkzeug sein, die zudem ein Kraftregelmodul zum Regeln eines Verlaufs einer Kraft aufweist, welche mindestens eine Elektrode eines Schweißwerkzeugs beim Herstellen einer Schweißverbindung auf mindestens ein Bauteil ausübt, wobei das Kraftregelmodul mit der Vorrichtung derart verbunden ist, dass das Kraftregelmodul die von der Vorrichtung erzeugte Ist-Kraft für das Regeln des Verlaufs der Kraft verwendet.

Hierbei kann die Vorrichtung zudem ausgestaltet sein, eine Differenz zwischen Ist-Werten der Kraft zu ermitteln, die bei einem Schweißvorgang mit dem Schweißwerkzeug von dem Ermittlungsmodul für unterschiedliche Schweißwerkzeugparameter für dieselbe Zeit erzeugt wurden, wobei die Vorrichtung ausgestaltet ist, der Schweißsteuerung mitzuteilen, dass ein Schweißvorgang abzubrechen ist, wenn die ermittelte Differenz zu groß ist.

Die zuvor beschriebene Schweißsteuerung kann zudem ein Einstellmodul zur Auswertung der Regelung des Kraftregelmoduls aufweisen, wobei das Einstellmodul ausgestaltet ist, das Schweißwerkzeug als Feder zu modellieren und mindestens einen Reglerparameter des Kraftregelmoduls auf der Grundlage von mindestens einem die Feder bestimmenden Parameter einzustellen.

Die zuvor beschriebene Vorrichtung kann Teil einer Schweißanlage sein, die zudem ein Schweißwerkzeug, das mindestens eine Elektrode zum Herstellen einer Schweißverbindung an mindestens einem Bauteil aufweist, und eine Schweißsteuerung zur Steuerung eines Herstellens einer Schweißverbindung mit dem Schweißwerkzeug aufweist, wobei das Kraftregelmodul mit der Vorrichtung derart verbunden ist, dass das Kraftregelmodul die von der Vorrichtung erzeugte Ist-Kraft für das Regeln des Verlaufs der Kraft verwendet.

Das Schweißwerkzeug ist ein Widerstandsschweißwerkzeug, das als Schweißzange mit zwei Elektroden ausgestaltet ist.

Die Aufgabe wird zudem durch ein Verfahren zur Erzeugung von Kraftwerten bei der Steuerung eines Schweißwerkzeugs nach Anspruch 12 gelöst. Das Verfahren wird mit einer Vorrichtung für eine Schweißsteuerung ausgeführt und hat die Schritte Ermitteln, mit einem Ermittlungsmodul, mindestens eines Schweißwerkzeugparameters, der von einem Antrieb des Schweißwerkzeugs relativ zu dem mindestens einen Bauteil bei einem Schweißvorgang mit dem Schweißwerkzeug abhängig ist, und Erzeugen, mit einem Kraftwert-Erzeugungsmodul, aus einem von dem Ermittlungsmodul ermittelten Schweißwerkzeugparameter, einer Ist-Kraft, die bei dem Schweißvorgang mit dem Schweißwerkzeug auftritt, wobei das Kraftwert-Erzeugungsmodul die Ist-Kraft mit einem Modell des Schweißwerkzeugs erzeugt, wie in Anspruch 12 beschrieben.

Das Verfahren erzielt die gleichen Vorteile, wie sie zuvor in Bezug auf die Vorrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:

Fig. 1 eine stark vereinfachte schematische Ansicht einer industriellen Anlage mit einer Schweißanlage gemäß einem ersten Ausführungsbeispiel, die eine Schweißsteuerung zum Steuern eines Schweißwerkzeugs und eine Vorrichtung zur Erzeugung von Ist-Kraftwerten am Schweißwerkzeug verwendet;

Fig. 2 eine Schnittansicht von Schweißelektroden des Schweißwerkzeugs gemäß dem ersten Ausführungsbeispiel in einem Betriebszustand, wenn das Schweißwerkzeug noch nicht zum Schweißen bereit ist;

Fig. 3 eine Schnittansicht von Schweißelektroden des Schweißwerkzeugs gemäß dem ersten Ausführungsbeispiel in einem Betriebszustand, wenn das Schweißwerkzeug zum Schweißen bereit ist und eine Schweißverbindung hergestellt wird;

Fig. 4 ein Schaubild eines Ersatzmodells einer C-Zange als Reihenschaltung von drei Federn;

Fig. 5 ein Zeitverlaufsdiagramm der Ist-Kraft bei einem speziellen Beispiel für einen Eingangssprung der Geschwindigkeit der Zangenschließbewegung $v_{ACT}$;

Fig. 6 eine vereinfachte Ansicht eines Regelkreises gemäß dem ersten Ausführungsbeispiel zur Regelung der Kraft, die bei Durchführen eines Schweißvorgangs oder Servicevorgangs von dem Schweißwerkzeug auf die Schweißstelle aufgebracht wird;

Fig. 7 ein Flussdiagramm eines Verfahrens, das von der Vorrichtung gemäß dem ersten Ausführungsbeispiel zum Erzeugen von Ist-Kraftwerten am Schweißwerkzeug ausgeführt wird und bei einem Herstellen einer Schweißverbindung verwendet wird; und

Fig. 8 ein Schaubild einer Vorrichtung zum Erzeugen von Ist-Kraftwerten bei einem Schweißwerkzeug gemäß einem zweiten Ausführungsbeispiel.

In den Figuren sind gleiche oder funktionsgleiche Elemente, sofern nichts anderes angegeben ist, mit denselben Bezugszeichen versehen.

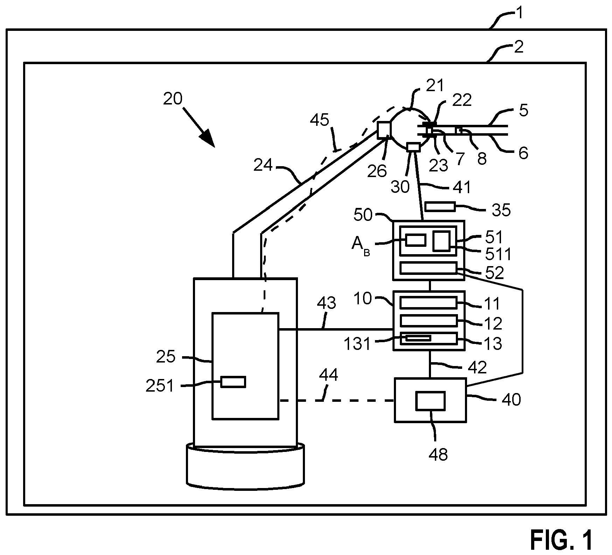

Fig. 1 zeigt eine industrielle Anlage 1 mit einer Schweißanlage 2, die zum Schweißen von mindestens einem metallischen Bauteil 5, 6 verwendet wird. Hierbei wird das mindestens eine metallische Bauteil 5, 6 mit mindestens einer Schweißverbindung 7 verbunden. Die mindestens eine Schweißverbindung 7 ist beispielsweise ein Schweißpunkt und/oder eine Schweißnaht. Dabei können die zwei metallischen Bauteile 5, 6 oder nur zwei Ränder eines der Bauteile 5, 6 miteinander verbunden werden. Ungewollt können beim Schweißen Schweißspritzer 8 auftreten.

Die industrielle Anlage 1 ist beispielsweise eine Fertigungsstraße für Fahrzeuge, Möbel, Bauwerke, usw., in welcher die metallischen Bauteile 5, 6 geschweißt werden. Hierzu weist die Schweißanlage 2 eine Schweißsteuerung 10, eine erste Vorrichtung 20 zum Führen eines als Widerstandschweißwerkzeug ausgeführten Schweißwerkzeugs 21 mit zwei Schweißelektroden 22, 23, eine Erfassungseinrichtung 30, die Daten 35 liefert, eine Bedieneinrichtung 40 und eine zweite Vorrichtung 50 auf. Die erste Vorrichtung 20 wird von einer Steuereinrichtung 25 gesteuert. Zudem sind Kommunikationsleitungen 41 bis 45 vorgesehen, die insbesondere als Bussystem ausgeführt sein können. Mit der Bedieneinrichtung 40 sind Meldungen 48 ausgebbar, insbesondere Statusmeldungen und/oder Fehlermeldungen und/oder sonstige Informationen. Die zweite Vorrichtung 50 dient zum Erzeugen von Werten der Ist-Kraft des Schweißwerkzeugs 21 beim Schweißvorgang. Hierfür verwendet die Vorrichtung 50 zumindest einen Teil der Daten 35.

Die Vorrichtung 20 ist insbesondere ein Roboter. Die Bedieneinrichtung 40 ist beispielsweise als Tastatur und/oder eine Maus, ein Laptop, ein berührungsempfindlicher oder berührungsunempfindlicher Bildschirm, usw. oder deren Kombinationen ausführbar.

Gemäß Fig. 1 ist das Schweißwerkzeug 21 eine Schweißzange mit mindestens einer Elektrode 22, 23. Insbesondere ist das Schweißwerkzeug 21 eine servoelektrische Schweißzange. Bei dem Beispiel von Fig. 1 ist die Schweißzange als eine C-Zange ausgebildet. Hierbei ist es möglich, dass einer der Zangenarme, an dessen Ende beispielsweise die Elektrode 22 angeordnet ist, ein beweglicher Zangenarm ist und der andere Zangenarm, an dessen Ende beispielsweise die Elektrode 23 angeordnet ist, ein feststehender Zangenarm ist. An dem feststehenden Zangenarm kann die Erfassungseinrichtung 30, insbesondere ihr Kraftsensor, vorgesehen sein. Selbstverständlich sind andere Varianten zur Ausführung des Schweißwerkzeugs 21 und/oder der Anordnung der Erfassungseinrichtung 30 an dem Schweißwerkzeug 21 möglich.

Die Schweißsteuerung 10 dient zur Steuerung des Schweißwerkzeugs 21. Daher ist die Schweißsteuerung 10 mit dem Schweißwerkzeug 21 bzw. dessen elektrischen Komponenten über die Kommunikationsleitung 41 verbunden. Die Schweißsteuerung 10 ist außerdem über die Kommunikationsleitung 42 mit der Bedieneinrichtung 40 verbunden. Zudem empfängt die Schweißsteuerung 10 über die Kommunikationsleitung 41 Daten 35, die beim Betrieb des Schweißwerkzeugs 21 von der Erfassungseinrichtung 30 erfasst wurden. Die Erfassungseinrichtung 30 hat hierzu mindestens einen Sensor zum Erfassen von physikalischen Größen, die beim Schweißen relevant sind und nachfolgend als die Daten 35 bezeichnet sind. Derartige physikalische Größen bzw. Daten 35 umfassen insbesondere eine Temperatur beim Ausführen eines Schweißvorgangs zur Herstellung einer Schweißverbindung 7, eine Lage der Elektroden 22, 23 im Raum und/oder relativ zu dem mindestens einen Bauteil 5, 6 oder sonstige physikalische Größen beim Schweißen.

Somit hat die Erfassungseinrichtung 30 insbesondere mindestens einen Lagesensor, beispielsweise einen Drehgeber und/oder einen Gyrosensor und/oder einen Bewegungssensor. Zusätzlich oder alternativ kann die Erfassungseinrichtung 30 insbesondere einen Temperatursensor aufweisen. Zusätzlich kann die Erfassungseinrichtung 30 mindestens einen Sensor zur Erfassung mindestens einer elektrischen Größe beim Schweißvorgang haben, insbesondere zum Erfassen des Schweißstroms Is.

Die Schweißsteuerung 10 hat ein Einstellmodul 11, ein Kraftregelmodul 12 und ein Speichermodul 13. Das optionale Einstellmodul 11 dient zum Einstellen von Reglerparametern des Kraftregelmoduls 12, optional durch Auswerten der Daten 35, die in dem Speichermodul 13 gespeichert werden.

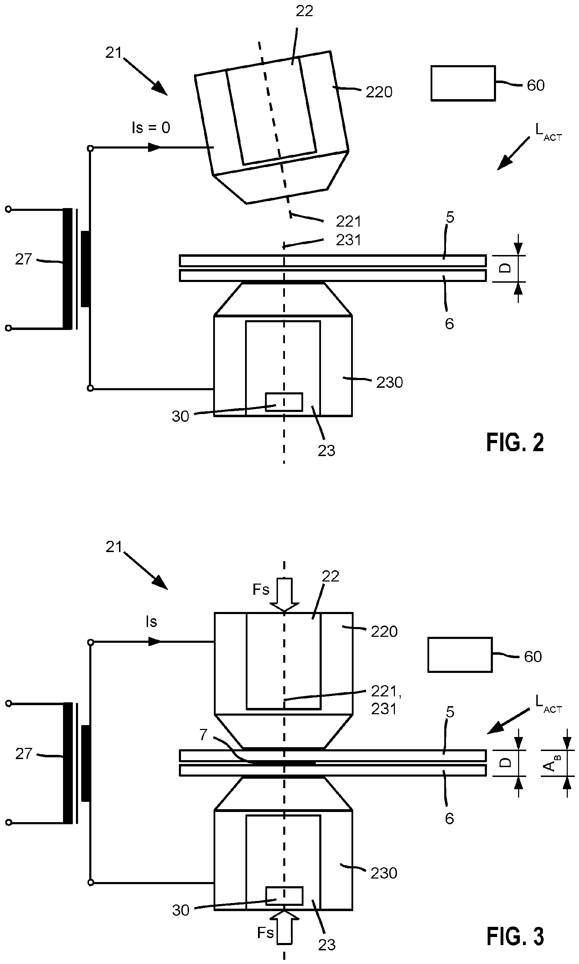

Für die Steuerung eines Schweißvorgangs mit dem Schweißwerkzeug 21 sind in der Schweißsteuerung 10, genauer gesagt ihrem Speichermodul 13, zudem interne Grundparameter bzw. Sollwerte 131 gespeichert, die entweder ab Werk oder später mit Hilfe der Bedieneinrichtung 40 von einem Benutzer eingegeben werden können. Die internen Grundparameter oder Sollwerte 131 können Parameter des Schweißwerkzeugs 21 sein. Zudem können die internen Grundparameter oder Sollwerte 131 Parameter der Schweißsteuerung 10 sein, mit welchen das Schweißwerkzeug 21 gesteuert wird. Insbesondere sind die internen Grundparameter oder Sollwerte 131 ein Phasenanschnitt eines Schweißstroms Is und/oder ein Widerstand R des Schweißwerkzeugs 21 und/oder die Halte- und/oder Anpresskraft Fs und/oder mindestens ein Grenzwert, der verwendet wird, um zu bestimmen, ob an der Bedieneinrichtung 40 eine Meldung 48 auszugeben ist, insbesondere eine Statusmeldung und/oder Fehlermeldung und/oder sonstige Informationen. Der Schweißstrom Is wird dem Schweißwerkzeug 21 durch einen in Fig. 1 nicht dargestellten Schweißtransformator zugeführt. Dies ist in Bezug auf Fig. 2 näher beschrieben.

Alle internen Grundparameter oder Sollwerte 131 sind als zeitlich abhängige Größen oder Soll-Zeitverläufe der jeweiligen Sollgrößen speicherbar. Somit sind insbesondere ein Schweißstrom Is(t) und/oder ein Widerstand R(t) des Schweißwerkzeugs 21 und/oder die Halte- und/oder Anpresskraft Fs(t) speicherbar. Dabei sind kontinuierliche Zeitverläufe oder intermittierend festgelegte Zeitverläufe speicherbar.

Die Erfassungseinrichtung 30 gibt zumindest einen Teil ihrer Daten 35 an die zweite Vorrichtung 50 aus. Die Daten 35 umfassen insbesondere eine zeitlich veränderliche Ist-Lage $L_{ACT}$ der Elektroden 22, 23, bzw. mindestens der zeitlich veränderlichen Ist-Lage $L_{ACT}$ der Elektrode 22 an dem beweglichen Zangenarm. Danach kann die Vorrichtung 50 die Daten 35 an die Schweißsteuerung 10 weitergeben.

Die zweite Vorrichtung 50 hat ein Ermittlungsmodul 51 und ein Kraftwert-Erzeugungsmodul 52. Das Ermittlungsmodul 51 dient zum Ermitteln, insbesondere Berechnen, einer Armaufbiegung $A_B$ des Schweißwerkzeugs 21. Dabei verwendet die Vorrichtung 50 ein Modell 511 des Schweißwerkzeugs 21 zur Ermittlung einer modellierten Stellung des Schweißwerkzeugs 21. Das Kraftwert-Erzeugungsmodul 52 dient zum Erzeugen von Ist-Kraftwerten $Fs\_{ACT}$ oder Fs(t) einer Halte- und/oder Anpresskraft Fs beim Schweißvorgang. Hierfür verwendet das Kraftwert-Erzeugungsmodul 52 jeweils die zuvor ermittelte Armaufbiegung $A_B$ des Schweißwerkzeugs 21. Das Kraftwert-Erzeugungsmodul 52 gibt die Ist-Kraftwerte $Fs\_{ACT}$ an die Schweißsteuerung 10 weiter, so dass die Ist-Kraftwerte $Fs\_{ACT}$ für eine Regelung eines Schweißvorgangs mit dem Schweißwerkzeug 21 verwendbar sind. Dies ist nachfolgend noch genauer beschrieben.

Beim Führen des Schweißwerkzeugs 21 mit einem Arm 24 der Vorrichtung 20 wird die Vorrichtung 20 von ihrer Steuereinrichtung 25 gesteuert. Hierfür ist die Steuereinrichtung 25 mit der Schweißsteuerung 10 über die Kommunikationsleitung 43 verbunden. Optional ist die Steuereinrichtung 25 mit der Bedieneinrichtung 40 über eine Kommunikationsleitung 44 verbunden. Das Öffnen oder Schließen des Schweißwerkzeugs 21 erfolgt durch den Antrieb einer Antriebseinrichtung 26.

Zusätzlich oder alternativ ist die Steuereinrichtung 25 direkt mit der Erfassungseinrichtung 30 und/oder den elektrischen Komponenten des Schweißwerkzeugs 21 mit Hilfe einer Kommunikationsleitung 45 verbunden. Besteht kein Redundanzbedarf, ist es möglich, die Kommunikationsleitung 43 wegzulassen.

Über die Kommunikationsleitungen 42 bis 45 können relevante Daten für die Durchführung einer Schweißung mit dem Schweißwerkzeug 21 zwischen der Schweißsteuerung 10 und der Vorrichtung 20, genauer gesagt der Steuereinrichtung 25, und/oder der Bedieneinrichtung 40 ausgetauscht werden. Zudem können in der Steuereinrichtung 25 interne Grundparameter oder Sollwerte 251 der Steuereinrichtung 25 gespeichert sein, mit welchen das Schweißwerkzeug 21, insbesondere für seine Positionierung im Raum und daher an den Bauteilen 5, 6 gesteuert wird.

Fig. 2 zeigt den Aufbau der Elektroden 22, 23 des Schweißwerkzeugs 21 bei dem vorliegenden Ausführungsbeispiel genauer. Demzufolge ist die Elektrode 22 als Elektrodenschaft ausgebildet, der an seinem einen Ende mit einer Elektrodenkappe 220 versehen ist. Die Elektrodenkappe 220 ist an der Elektrode 22 an ihrem dem Bauteil 5 zugewandten Ende angeordnet. Die Elektrodenkappe 220 hat eine Achse 221. Die Achse 221 ist identisch mit der Achse der Elektrode 22. Außerdem ist die Elektrode 23 als Elektrodenschaft ausgebildet, der mit einer Elektrodenkappe 230 versehen ist. Die Elektrodenkappe 230 ist an der Elektrode 23 an ihrem dem Bauteil 6 zugewandten Ende angeordnet. Die Elektrodenkappe 230 hat eine Achse 231. Die Achse 231 ist identisch mit der Achse der Elektrode 23.

Bei dem Beispiel von Fig. 2 ist die Elektrode 22 an dem beweglichen Zangenarm des Schweißwerkzeugs 21 montiert. Die Elektrode 23 ist an dem feststehenden Zangenarm des Schweißwerkzeugs 21 montiert. Bei dem vorliegenden Beispiel sind die Zangenarme des Schweißwerkzeugs 21 geöffnet. Dadurch stehen die Achsen 221, 231 quer zueinander. Das mindestens eine Bauteil 5, 6 hat dagegen zwischen den Elektroden 22, 23, genauer gesagt deren Elektrodenkappen 220, 230, eine Dicke D.

Der Betriebszustand von Fig. 2 liegt beim Anordnen des Schweißwerkzeugs 21 an einer zu verschweißenden Stelle an den Bauteilen 5, 6 vor. In diesem Betriebszustand ist das Schweißwerkzeug 21 noch nicht bereit zum Schweißen. Daher wird von einem Schweißtransformator 27 noch kein Schweißstrom Is zugeführt.

Das Schweißwerkzeug 21 kann mit einer sehr schematisch dargestellten Reinigungseinrichtung 60, die als Fräs- und/oder Schneideinrichtung oder Austauscheinrichtung ausgeführt sein kann, derart bearbeitet werden, dass der verschmutzte Teil einer der Elektrodenkappen 220, 230 bei Bedarf abgeschnitten oder abgefräst wird. Die Elektrodenkappen 220, 230 sind demzufolge Verschleißobjekte.

Wie in Fig. 3 veranschaulicht, werden die Elektroden 22, 23 im Betrieb des Schweißwerkzeugs 21 an beiden Seiten der zu verschweißenden Stelle an das mindestens eine Bauteil 5, 6 angeordnet und mit Hilfe der Halte- und/oder Anpresskraft Fs an das mindestens eine Bauteil 5, 6 angesetzt. Dadurch sind die Achsen 221, 231 im Idealfall auf einer Linie angeordnet.

Anders ausgedrückt, bei dem Betriebszustand von Fig. 3 spannen die beiden Elektroden 22, 23 die Bauteile 5, 6 mit der Kraft Fs ein. Die Elektroden 22, 23 sind je nach Anzahl der bereits durchgeführten Fräs- und/oder Schneidvorgänge an den Elektrodenkappen 220, 230 unterschiedlich weit an das mindestens eine Bauteil 5, 6 zuzustellen, um die gewünschte Kraft Fs zu erzielen.

Bei diesem Zustand, bei dem das Schweißwerkzeug 21 geschlossen ist und eine Kraft Fs aufgebaut worden ist, entsteht eine Armaufbiegung $A_B$. Die Zangenarme des Schweißwerkzeugs 21 verhalten sich wie eine Feder, wie nachfolgend noch genauer beschrieben.

Anschließend wird den Elektroden 22, 23 mit Hilfe eines Schweißtransformators 27 ein Schweißstrom Is für eine vorbestimmte Zeitdauer T und in einer vorbestimmten Charakteristik zugeführt. Hierfür wird der Strom Is mit definiertem Stromverlauf, insbesondere mindestens teilweise geregelt, zugeführt. Dadurch entsteht Wärme in dem mindestens einen Bauteil 5, 6, so dass sich eine Schweißlinse ausbildet, die später die Schweißverbindung 7 bildet.

Wie zuvor erwähnt, werden im Betrieb des Schweißwerkzeugs 21 Daten 35 mit der Erfassungseinrichtung 30 erfasst. Da kein Kraftsensor zur Verfügung steht, geht die Vorrichtung 50 folgendermaßen vor.

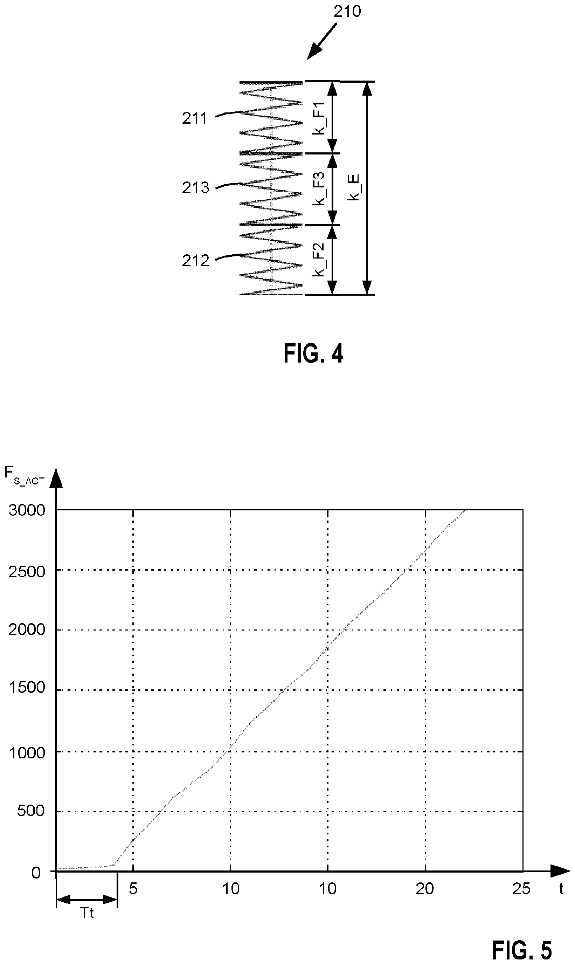

Die Vorrichtung 50 verwendet das Modell 511 des Schweißwerkzeugs 21, um eine modellierte Stellung des Schweißwerkzeugs 21 zu ermitteln, insbesondere eine Armaufbiegung $A_B$ des Schweißwerkzeugs 21. Dabei nimmt das Modell 511 das Schweißwerkzeug 21 als Feder an. Demzufolge ist dem Schweißwerkzeug 21 in dem Modell 511 eine Ersatzfederkonstante k_E zugewiesen, wie in Bezug auf Fig. 4 näher erläutert ist. Die Ersatzfederkonstante k_E wird bei der Inbetriebnahme des Schweißwerkzeugs 21, insbesondere unter Verwendung einer Kraftmessdose, ermittelt.

Die Armaufbiegung $A_B$ des Schweißwerkzeugs 21 bei dem Schweißvorgang und/oder im Laufe des Schweißvorgangs berechnet sich in dem Modell 511 aus einer Ist-Lage $L_{ACT}$ beim Schweißvorgang, einer vorbestimmten Lage $L_G$ und der Dicke D als

$$A_B = L_{\_ACT} - L_G + D \qquad \qquad \dots (1)$$

Die vorbestimmte Lage $L_G$ von Gleichung (1) wird als Ist-Lage bei geschlossenem Schweißwerkzeug 21 bezeichnet. Bei dieser Lage $L_G$ ist das Schweißwerkzeug 21 geschlossen und es ist kein Bauteil 5, 6 mit einer Dicke D zwischen den Elektroden 22, 23 angeordnet. Somit sind die Elektroden 22, 23 und somit deren Elektrodenkappen 220, 230 des Schweißwerkzeugs 21 in einer vorbestimmten Lage $L_G$ angeordnet.

Hat das Ermittlungsmodul 51 die jeweilige Ist-Armaufbiegung $A_B$ ermittelt, kann das Kraftwert-Erzeugungsmodul 52 die Ist-Kraft $F_{S\_ACT}$ mit der folgenden Gleichung (2) unter Verwendung der Ersatzfederkonstante k_E berechnen und damit erzeugen.

$$F_{S\_ACT} = k\_E * A_B \qquad \qquad \dots (2)$$

Wie aus Gleichung (2) ablesbar, ist die Armaufbiegung $A_B$ des Schweißwerkzeugs 21 abhängig von der Ist-Kraft $F_{S\_ACT}$ der Halte- und/oder Anpresskraft Fs. Das heißt, umso größer die Ist-Kraft $F_{S\_ACT}$ der Halte- und/oder Anpresskraft Fs ist, umso größer ist die Armaufbiegung $A_B$. Bei geöffneten Zangenarmen des Schweißwerkzeugs 21 ist die Ist-Kraft $F_{S\_ACT}$ = 0. Damit ist in diesem Zustand auch die Armaufbiegung $A_B$ = 0.

Gemäß Fig. 4 ergibt sich die Ersatzfederkonstante k_E aus einem Ersatzmodell 210 des Schweißwerkzeugs 21, das dem Modell 511 zugrunde liegt und das von der Vorrichtung 50 verwendet wird. Das Ersatzmodell 210 modelliert das Schweißwerkzeug 21 als Feder, genauer gesagt als eine Reihenschaltung von Federn 211, 212, 213. Hierbei ist die Feder 213 zwischen den Federn 211, 212 angeordnet. Die Gesamtfeder, und damit die modellierte Schweißzange 21, ist durch eine Ersatzfederkonstante k_E und eine Totzeit Tt bestimmt. Die Totzeit Tt ist in Fig. 5 veranschaulicht, in welcher die Ist-Kraft $F_{S\_ACT}$ der Halte- und/oder Anpresskraft Fs über der Zeit t bei einem Eingangssprung der Ist-Geschwindigkeit der Zangenbewegung $v_{ACT}$ veranschaulicht ist. Bei dem Beispiel von Fig. 5 ist die Ist-Kraft $F_{S\_ACT}$ in der physikalischen Einheit N angegeben und die Zeit t in der physikalischen Einheit ms.

Die Feder 211 steht für die mechanischen Eigenschaften des ersten Zangenarms des Schweißwerkzeugs 21, der hier beweglich ist. Die Feder 212 steht für die mechanischen Eigenschaften des zweiten Zangenarms des Schweißwerkzeugs 21, der hier feststehend ist. Die Feder 213 steht für die mechanischen Eigenschaften des mindestens einen Bauteils 5, 6.

Die Feder 211 hat eine Federkonstante k_F1. Die Feder 212 hat eine Federkonstante k_F2. Die Feder 213 hat eine Federkonstante k_F3. Durch die Reihenschaltung ergibt sich eine Gesamtfederkonstante oder die Ersatzfederkonstante k_E gemäß Gleichung (3)

$$1/k\_E = 1/k\_F1 + 1/k\_F2 + 1/k\_F3 \qquad \ldots (3)$$

Die Gesamtfederkonstante oder Ersatzfederkonstante k_E ist somit immer kleiner als jede einzelne Federkonstante k_F1, k_F2 + k_F3. Demzufolge ergibt der Zusammenschluss der Federn 211 bis 213 eine weichere Gesamtfeder. Die über der Zeit t veränderliche Kraft $F_S(t)$ wirkt bei der Reihenschaltung der Federn 211 bis 213 an jeder der Federn 211 bis 213 mit dem gleichen Betrag.

Die Vorrichtung 50, insbesondere ihr Ermittlungsmodul 51, kann, die Ersatzfederkonstante k_E aus der folgenden Gleichung (4) berechnen. Diese Berechnung kann beispielsweise bei der Inbetriebnahme der Schweißanlage 2 und/oder des Schweißwerkzeugs 21 erfolgen, wie bereits zuvor beschrieben.

$$k\_E = \Delta F_{S\_ACT} / \Delta s_{ACT} = \Delta F_{S\_ACT} / v_{ACT} \, {}^* \Delta t \qquad \ldots (4)$$

Hierbei ist $\Delta F_{S\_ACT}$ die Differenz der erfassten Kraft, die sich ergibt, wenn mindestens ein Zangenarm des Schweißwerkzeugs 21 für eine vorbestimmte Zeitdauer $\Delta t$ mit einer vorbestimmten konstanten Geschwindigkeit $v_{ACT}$ angetrieben wird. Dabei werden die Zangenarme, also die Federn 211, 212, und somit auch die Feder 213 um einen Weg $\Delta s_{ACT}$ zusammengedrückt.

Ist die Ersatzfederkonstante k_E und/oder die Totzeit Tt ermittelt, insbesondere unter Verwendung einer Kraftmessdose, werden die ermittelte Ersatzfederkonstante k_E und/oder die ermittelte Totzeit Tt in den Daten 35 in dem Modell 511 und gegebenenfalls zusätzlich in dem Speichermodul 13 gespeichert. Daher kann die Vorrichtung 50 bei nachfolgenden Schweißvorgängen mit dem Schweißwerkzeug 21 die Ersatzfederkonstante k_E und/oder die Totzeit Tt verwenden.

Alternativ ist es möglich, die Armaufbiegung $A_B$ stattdessen als Funktion der Ist-Kraft $F_{S\_ACT}$ als Polynom 1. bis 3. Ordnung mit der folgenden Gleichung (5) zu ermitteln:

$$A_B = a \, {}^* F_{S\_ACT}^3 + b \, {}^* F_{S\_ACT}^2 + c \, {}^* {}^* F_{S\_ACT} + d \qquad \ldots (5)$$

Die Identifikation der Koeffizienten a, b, c und d wird mit einem Approximationsverfahren durchgeführt, welches nach vorausgegangenen Messungen die relative Abweichung zwischen berechneten und gemessenen Werten der Armaufbiegung $A_B$ über den gesamten Einsatzbereich des Schweißwerkzeugs 21 minimiert. Zum Einsatz kommt hierbei das Verfahren der kleinsten Fehlerquadrate. Die Bestimmung der Ersatzfederkonstante k_E ist ein Spezialfall dieses Verfahrens, bei dem die Koeffizienten a, b und d auf null gesetzt werden. Ist c die Ersatzfederkonstante k_E, ergibt sich als Gleichung (6)

$$AB = c \, {}^* F_{S\_ACT} = k\_E {}^* F_{S\_ACT} \qquad \ldots (6)$$

Bei dem Schweißvorgang oder im Laufe des Schweißvorgangs nimmt die Ist-Kraft $F_{S\_ACT}$ aufgrund der Wärmeausdehnung des Materials des mindestens einen Bauteils 5, 6 nach Einleiten des Schweißstroms Is zu. Dagegen nimmt die Ist-Kraft $F_{S\_ACT}$ nach Aufschmelzen des mindestens einen Bauteils 5, 6 für die Schweißverbindung 7 ab. Treten Schweißspritzer 8 auf, nimmt die Ist-Kraft $F_{S\_ACT}$ ebenfalls ab. Somit ist die Ist-Kraft $F_{S\_ACT}$ und dadurch auch die Armaufbiegung $A_B$ des Schweißwerkzeugs 21 bei dem Schweißvorgang oder im Laufe des Schweißvorgangs zeitlich veränderlich.

Das Kraftwert-Erzeugungsmodul 52 kann die erzeugte Ist-Kraft $F_{S\_ACT}$ bei einem Schweißvorgang oder im Laufe eines Schweißvorgangs jeweils bzw. kontinuierlich an die Schweißsteuerung 10 weitergeben, so dass die Werte der erzeugten Ist-Kraft $F_{S\_ACT}$ bei einer Regelung der Kraft Fs mit dem Kraftregelmodul 12 verwendbar sind.

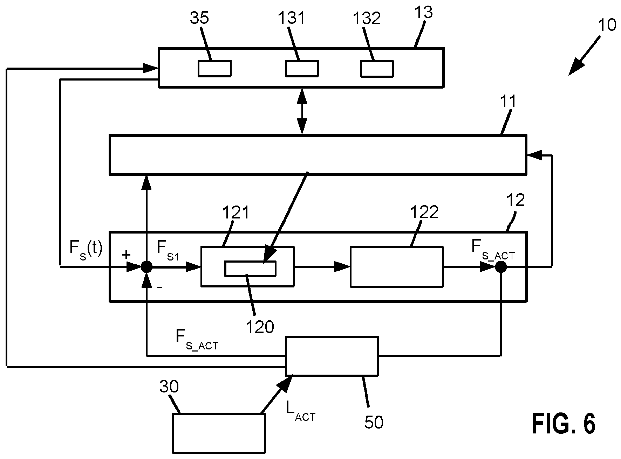

Fig. 6 veranschaulicht den Aufbau des mit dem Kraftregelmodul 12 gebildeten Regelkreises für die Halte- und/oder Anpresskraft Fs bei einem Schweißvorgang mit dem Schweißwerkzeug 21.

Die Regelstrecke 122 ist eine integrierende Strecke (I-Strecke). Außerdem existiert die Totzeit Tt, die zwischen Einleiten und Wirken der Kraft Fs auf das Schweißwerkzeug 21 wirkt. Bei der Regelstrecke 122 tritt somit eine zeitliche Verzögerung beim Aufbau der Kraft $F_S(t)$ in Form der Totzeit Tt auf, wie zuvor in Bezug auf Fig. 5 beschrieben.

Bei dem Schweißvorgang wird eine Schweißverbindung 7 hergestellt. Fig. 6 zeigt somit das Kraftregelmodul 12 und seine Verschaltung mit dem Einstellmodul 11, dem Speichermodul 13, der Erfassungseinrichtung 30 und der Vorrichtung 50 genauer. In dem Speichermodul 13 sind zudem die Daten 35 speicherbar, unter anderem die von der Vorrichtung 50 beim Schweißvorgang erzeugte Ist-Lage $L_{ACT}$. Außerdem sind in dem Speichermodul 13 die Grundparameter und Sollgrößen 131 gespeichert, unter anderem eine zeitabhängige Soll-Kraft Fs(t) für die Halte- und/oder Anpresskraft. Noch dazu sind in dem Speichermodul 13 die Einstellparameter 132 des Einstellmoduls 11 speicherbar.

Das Kraftregelmodul 12 hat einen Regler 121 mit speziell eingestellten Reglerparametern 120 und eine Regelstrecke 122. Wie nachfolgend genauer erläutert ist, ist der Regler 121 bei dem vorliegenden Beispiel ein PD-Regler. Der PD-Regler ist eine Kombination aus Proportionalregler und Differentialregler. Die Regelstrecke 112 ist derjenige Teil des mit dem Kraftregelmodul 12 gebildeten Regelkreises, der die zu regelnde physikalische Größe enthält, nämlich hier die Halte- und/oder Anpresskraft Fs. Optional sind zusätzlich andere physikalische Größen regelbar, insbesondere die Ist-Lage $L_{ACT}$.

Die aktuell wirkende Kraft $F_{S\_ACT}$ wird von der Vorrichtung 50 erzeugt, wie zuvor erläutert. Die Kraft $F_{S\_ACT}$ wird wieder dem PD-Regler 121 zugeführt, wie in Fig. 6 gezeigt.

Der PD-Regler 121 wirkt somit auf die Differenz von Sollgröße, also der Soll-Kraft Fs(t) der Halte- und/oder Anpresskraft Fs, und der von der Vorrichtung 50 erzeugten Ist-Kraft $F_{S\_ACT}$ der Halte- und/oder Anpresskraft Fs. In Folge dessen stellt sich eine Kraft $F_{S\_ACT}$ ein, die beim Schweißvorgang auf die Elektroden 22, 23 und somit auf das mindestens eine Bauteil 5, 6 wirkt.

Das Einstellmodul 11 kann optional die Reglerparameter 120 einstellen. Hierbei können die Reglerparameter 120 optimiert werden, die für die gewünschte Schweißqualität mit dem derzeit verwendeten Schweißwerkzeug 21 benötigt werden. Optional kann das Einstellmodul 11 die eingestellten Reglerparameter 120 im laufenden Betrieb der Schweißanlage weiter anpassen. Hierbei ist beispielsweise eine Analyse der Regelabweichung $F_{S1} = F_S(t) - F_{S\_ACT}$ ausführbar.

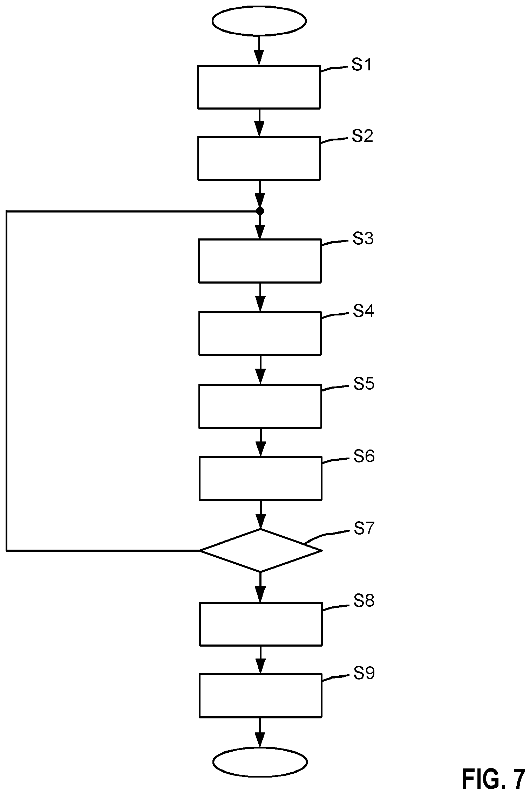

Bei einem Verfahren zur Erzeugung der Werte der Ist-Kraft $F_{S\_ACT}$ für einen Schweißvorgang geht die Vorrichtung 50 folgendermaßen vor. Das Verfahren ist in Fig. 7 veranschaulicht.

Das Verfahren von Fig. 7 zur Erzeugung der Werte der Ist-Kraft $F_{S\_ACT}$ und zum Steuern eines Schweißwerkzeugs 21 wird beispielsweise für die Herstellung einer Schweißverbindung 7 bei einem Schweißvorgang durchgeführt. Bei dem Schweißvorgang ist im Normalfall die Beaufschlagung mit einem Schweißstrom $I_S$ vorgesehen. Alternativ kann das Verfahren von Fig. 7 jedoch bei einem Servicevorgang durchgeführt, also ohne Beaufschlagung mit einem Schweißstrom $I_S$.

Bei einem Schritt S1 ermittelt das Ermittlungsmodul 51 die Ersatzfederkonstante k_E gemäß der zuvor genannten Gleichung (4). Das Ermittlungsmodul 51 gibt die Ersatzfederkonstante k_E in das Modell 511 ein und speichert optional die Ersatzfederkonstante k_E in dem Speichermodul 13. Danach geht der Fluss zu einem Schritt S2 weiter.

Bei dem Schritt S2 kann ein Schweißvorgang zum Herstellen einer Schweißverbindung 7 gestartet werden. Danach geht der Fluss zu einem Schritt S3 weiter.

Bei dem Schritt S3 erfasst die Erfassungseinrichtung 30 die Ist-Lage $L_{ACT}$ und sendet diese als Daten 35 an die Vorrichtung 50. Danach geht der Fluss zu einem Schritt S4 weiter.

Bei dem Schritt S4 ermittelt das Ermittlungsmodul 51 die Armaufbiegung $A_B$ gemäß der zuvor genannten Gleichung (1) und leitet die ermittelte Armaufbiegung $A_B$ an das Kraftwert-Erzeugungsmodul 52 weiter. Danach geht der Fluss zu einem Schritt S5 weiter.

Bei dem Schritt S5 bestimmt das Kraftwert-Erzeugungsmodul 52 den zugehörigen Wert der Ist-Kraft $F_{S\_ACT}$ aus der bei dem Schritt S4 ermittelten Armaufbiegung $A_B$. Das heißt, das Kraftwert-Erzeugungsmodul 52 erzeugt den Wert der Ist-Kraft $F_{S\_ACT}$ mit der zuvor genannten Gleichung (2). Danach geht der Fluss zu einem Schritt S6 weiter.

Bei dem Schritt S6 wird der Schweißvorgang mit dem Wert der Ist-Kraft $F_{S\_ACT}$ ausgeführt, der bei dem Schritt S5 erzeugt wurde. Somit wird unter Steuerung der Schweißsteuerung 10 die Schweißverbindung 7 mit dem Schweißwerkzeug 21 an dem mindestens einen Bauteil 5, 6 hergestellt, wie zuvor beschrieben. Anschließend geht der Fluss zu einem Schritt S7 weiter.

Bei dem Schritt S7 wird geprüft, ob der Schweißvorgang fortzusetzen ist oder nicht. Ist der Schweißvorgang fortzusetzen, geht der Fluss zu dem Schritt S3 zurück. Andernfalls, also wenn der Schweißvorgang zu beenden ist, geht der Fluss zu einem Schritt S8 weiter

Bei dem Schritt S8 wird geprüft, ob die bei dem Schritt S3 hergestellte

Schweißverbindung 7 die vorgegebenen Qualitätsanforderungen erfüllt. Anschließend geht der Fluss zu einem Schritt S9 weiter.

Bei dem Schritt S9 wird das Ergebnis der Prüfung des Schritts S8 in dem Speichermodul 13 gespeichert. Alternativ oder zusätzlich wird das Ergebnis der Prüfung des Schritts S8 als eine entsprechende Meldung 48 an der Bedieneinrichtung 40 ausgegeben. Die Ausgabe kann insbesondere optisch und/oder akustisch erfolgen. Danach ist das Verfahren beendet.

Der zuvor beschriebene Schritt S1 des Verfahrens von Fig. 7 kann entweder vor jedem Schweißvorgang ausgeführt werden, oder vor jedem Servicevorgang wie beispielsweise einem Reinigungsvorgang mit der Reinigungsvorrichtung 60. Die Schritte S3 bis S5 für eine vorbestimmte Zeiteinheit werden vorzugsweise zumindest teilweise gleichzeitig mit dem Schritt S6 für eine vorangehende Zeiteinheit durchgeführt werden, so dass ein kontinuierlicher Schweißvorgang ausgeführt wird. Ganz allgemein kann die Erzeugung der Kraftwerte der Kraft Fs bei jedem Schließen des Schweißwerkzeugs 21 durchgeführt werden, bei dem die Ist-Kraft $F_{S\_ACT}$ gemessen wird, also beispielsweise vor einem Schweißvorgang (mit Schweißstrom) oder vor einem Servicevorgang (ohne Schweißstrom), beispielsweise Fräsen, Setzhub, oder dergleichen.

Im Unterschied zu der vorangehenden Beschreibung, bei der das Modell 511 die Federkonstante k_F1 des feststehenden Zangenarms für das jeweilige Schweißwerkzeug 21 als konstant annimmt, kann die Federkonstante k_F1 des feststehenden Zangenarms jedoch für die verschiedenen Schweißwerkzeuge 21 während der Lebensdauer des Schweißwerkzeugs 21 durch mechanische Abnutzungserscheinungen variieren. Außerdem kann es durch das Erwärmen des Schweißwerkzeugs 21 während des Schweißens zu einer Änderung der Federkonstante k_F1 kommen. Bei Bedarf kann die Federkonstante k_F1 daher zeitlich variierbar sein. Diese Variation kann im Laufe der Lebensdauer des Schweißwerkzeugs 21 und/oder bei einem Schweißvorgang, insbesondere im Laufe eines Schweißvorgangs, erfolgen.

Außerdem nimmt das Modell 511 die Federkonstante k_F2 des beweglichen Zangenarms für das jeweilige Schweißwerkzeug 21 als konstant an. Die Federkonstante k_F2 des beweglichen Zangenarms kann jedoch für die verschiedenen Schweißwerkzeuge 21 während der Lebensdauer des Schweißwerkzeugs 21 durch mechanische Abnutzungserscheinungen variieren. Außerdem kann es durch das Erwärmen des Schweißwerkzeugs 21 während des Schweißens zu einer Änderung der Federkonstante k_F2 kommen. Bei Bedarf kann die Federkonstante k_F2 daher zeitlich variierbar sein. Diese Variation kann im Laufe der Lebensdauer des Schweißwerkzeugs 21 und/oder bei einem Schweißvorgang, insbesondere im Laufe eines Schweißvorgangs, erfolgen.

Noch dazu berücksichtigt das Modell 511 im Unterschied zu der vorangehenden Beschreibung, dass sich die Federkonstante k_F3 des mindestens einen Bauteils 5, 6 in einer Zeitspanne zwischen den Reinigungsvorgängen mit der Reinigungsvorrichtung 60 Zeit t ändert. Die Änderung der Federkonstante k_F3 tritt bei Durchführung eines Schweißvorgangs auf. Beispielsweise tritt eine Änderung aufgrund des wärmebedingten Ausdehnens und aufgrund des Aufschmelzens der Bauteile 5, 6 auf. Dies stellt Störgrößen bei der Ermittlung der Lage der Ist-Lage $L_{ACT}$ der Elektroden 22, 23 beim Schweißvorgang dar.

Die Vorrichtung 50 bzw. das Modell 511 ändert die Federkonstante k_F3 und damit die Ersatzfederkonstante k_E abhängig von dem Fortschritt des Schweißvorgangs. Somit ermittelt die Vorrichtung 50 auch die Armaufbiegung $A_B$ des Schweißwerkzeugs 21 gemäß Gleichung (1) jeweils neu. Außerdem ermittelt die Vorrichtung 50 die Werte der Ist-Kraft $F_{S\_ACT}$ gemäß Gleichung (2) jeweils neu.

Zur Änderung der Ersatzfederkonstante k_E abhängig von dem Fortschritt des Schweißvorgangs verwendet die Vorrichtung 50 mindestens ein Erfassungsergebnis der Erfassungseinrichtung 30. Das mindestens eine Erfassungsergebnis der Erfassungseinrichtung 30 kann optional aus den Daten 35 in dem Speichermodul 13 bezogen werden. Beispielsweise verwendet die Vorrichtung 50 als Erfassungsergebnis die erfasste Temperatur des mindestens einen Bauteils 5, 6 an dem Schweißpunkt für eine Schweißverbindung 7. Zusätzlich oder alternativ kann die Vorrichtung 50 als Erfassungsergebnis den erfassten Schweißstrom Is verwenden, der bei dem aktuell durchgeführten Schweißvorgang fließt.

Zudem kann das Einstellmodul 11 die Reglerparametrierung 120 abhängig von der geänderten Ersatzfederkonstante k_E ändern.

Gemäß einer Modifikation des vorliegenden Ausführungsbeispiels wertet das Einstellmodul 11 nicht die Regelabweichung $F_{S1}$ aus, wie zuvor beschrieben. Stattdessen wertet die Schweißsteuerung 10, insbesondere ihr Einstellmodul 11, das Frequenzspektrum der Ist-Kraft $F_{S\_ACT}$ aus. Hierbei verwendet die Schweißsteuerung 10, insbesondere ihr Einstellmodul 11, eine FFT-Analyse (FFT = Fast Fourier Transformation). Sind in dem Frequenzspektrum der Ist-Kraft $F_{S\_ACT}$ Maxima erkennbar, dann deutet dies auf eine Schwingung hin. Somit wertet das Einstellmodul 11 die Maxima als ein Vorliegen einer Kraftschwingung. Auch auf diese Weise können Kraftschwingungen erkannt und vermieden werden.

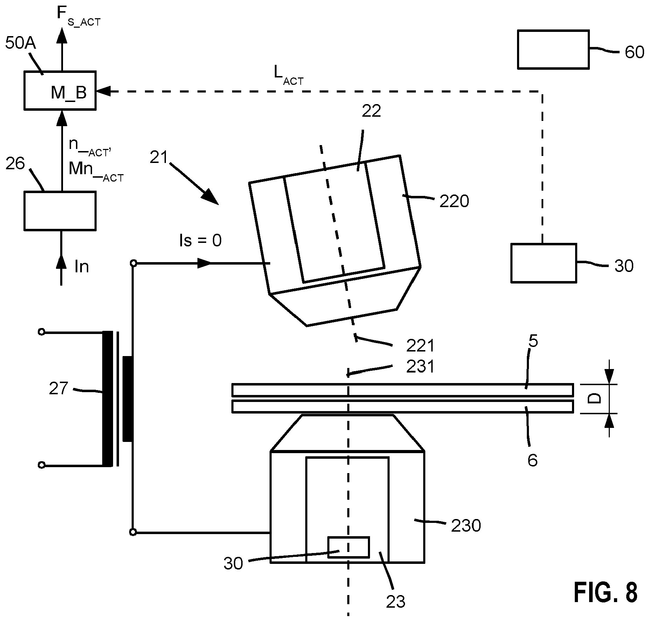

Fig. 8 zeigt eine Vorrichtung 50A und einen Teil eines Schweißwerkzeugs 21, das bei einem zweiten Ausführungsbeispiel verwendbar ist. Das Schweißwerkzeug 21 hat eine Antriebseinrichtung 26 zum Antrieb des Schweißwerkzeugs 21 zur Veränderung der Armaufbiegung $A_B$. Hierbei wird die Antriebseinrichtung 26 mit einem Antriebsstrom In versorgt, so dass die Antriebseinrichtung 26 mit einer vorbestimmten Drehzahl n und mit einem vorbestimmten Drehmoment Mn angetrieben wird. Dabei ergibt sich ein Ist-Drehmoment $Mn\_ACT$ und eine Ist-Drehzahl $n\_ACT$.

Die Vorrichtung 50A ist im Unterschied zu der Vorrichtung 50 gemäß dem vorangehenden Ausführungsbeispiel ausgestaltet, zur Erzeugung der Werte für die Ist-Kraft $F_{S\_ACT}$ folgendermaßen vorzugehen.

Das Ermittlungsmodul 51 ermittelt bei Durchführen eines Schweißvorgangs ein auf die Elektroden 22, 23 wirkendes

Beschleunigungsmoment M_B aus der Ableitung der Ist-Drehzahl $n\_ACT$ der Antriebseinrichtung 26 nach der Zeit t und dem Gesamtträgheitsmoment J_ges des Schweißwerkzeugs 21 in kg * m² als

$$M\_B = 2\pi * J\_ges * (d(n\_ACT)/dt) \qquad \ldots (7)$$

Das Beschleunigungsmoment M_B ist das Drehmoment, das aufgrund eines Antriebs der Bewegung der Elektroden 22, 23 relativ zum mindestens einen Bauteil 5, 6 durch die Antriebseinrichtung 26 beim Schweißvorgang wirkt. Das Gesamtträgheitsmoment J_ges des Schweißwerkzeugs 21 kann bei der Inbetriebnahme des Schweißwerkzeugs 21 ermittelt werden und wird in dem Modell 511 des Schweißwerkzeugs 21 gespeichert.

Das Kraftwert-Erzeugungsmodul 52 berechnet anschließend mit dem gemäß Gleichung (7) ermittelten Beschleunigungsmoment M_B, dem Ist-Drehmoment $Mn\_ACT$ und einer Vorschubkonstante kv in Meter pro Umdrehung (m/U), die sich aus der Ist-Vorschubgeschwindigkeit $v_{ACT}$ der mindestens einen Elektrode 22, 23 der Schweißzange 21 und der Ist-Drehzahl $n\_ACT$ der Antriebseinrichtung 26 berechnet, die Ist-Kraft $F_{S\_ACT}$ gemäß Gleichung (8) als

$$F_{S\_ACT} = 2\pi * (Mn\_ACT - M\_B) / kv$$
$$= 2\pi * (Mn\_ACT - M\_B) / (v_{ACT} / n_{ACT}) \qquad \ldots (8)$$

Dabei wird die Differenz aus dem aktuellen Drehmoment oder dem Ist-Drehmoment $Mn\_ACT$ beim Schweißvorgang und dem von dem Ermittlungsmodul 51 ermittelten Beschleunigungsmoment M_B verwendet. Die Vorschubkonstante kv des Schweißwerkzeugs 21 kann bei der Inbetriebnahme des Schweißwerkzeugs 21 ermittelt werden und wird in dem Modell 511 des Schweißwerkzeugs 21 gespeichert.

Somit ist bei dem vorliegenden Ausführungsbeispiel ein separater Lagesensor nicht erforderlich. Dies reduziert die Kosten weiter, um der Schweißsteuerung 10 die Ist-Kraft $F_{S\_ACT}$ zum Herstellen einer Schweißverbindung 7 zuzuführen.

Ist jedoch eine besonders hohe Genauigkeit und/oder Redundanz und damit Sicherheit gefordert, kann der Vorrichtung 50A optional auch die Ist-Lage $L_{ACT}$ zugeführt werden, wie mit einem gestrichelten Pfeil in Fig. 8 gezeigt. Damit ist eine Kombination der Ermittlungen des Ermittlungsmoduls 51 für die Lage $L\_ACT$ der Elektroden 22, 23, wie für die Vorrichtung 50 zuvor beschrieben, und des Ist-Drehmoment $Mn\_ACT$ der Antriebseinrichtung 26 beim Schweißvorgang, wie für die Vorrichtung 50A zuvor beschrieben, möglich. Hierbei kann gegebenenfalls der Ermittlung von einer der Vorrichtungen 50, 50A eine höhere Gewichtung gegeben werden, wenn die erzeugten Werte der Ist-Kraft $F_{S\_ACT}$ voneinander abweichen bzw. außerhalb eines vorbestimmten Toleranzbereichs liegen. Dies ermöglicht eine noch bessere und/oder sicherere Erzeugung von Kraftwerten der Ist-Kraft $F_{S\_ACT}$. Zudem kann die Vorrichtung 50, 50A ausgestaltet sein, einen Abbruch des Schweißvorgangs und die Ausgabe einer entsprechenden Meldung 48 zu bewirken, wenn die erzeugten Werte der Ist-Kraft $F_{S\_ACT}$ voneinander abweichen bzw. außerhalb eines vorbestimmten Toleranzbereichs liegen.

Gemäß einem vierten Ausführungsbeispiel ist das Schweißwerkzeug 21 als eine X-Zange ausgebildet. Die Elektroden 22, 23 sind bei den genannten Schweißzangen vorzugsweise als wassergekühlte Elektrodenschäfte ausgeführt.

Alle zuvor beschriebenen Ausgestaltungen der Schweißanlage 2, der Schweißsteuerung 10, der Vorrichtungen 50, 50A, des Einstellmoduls 11, des Kraftregelmoduls 12 und der Verfahren können einzeln oder in allen möglichen Kombinationen Verwendung finden. Insbesondere können alle Merkmale und/oder Funktionen der zuvor beschriebenen Ausführungsbeispiele beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Denkbar ist, dass zumindest eine der Vorrichtungen 50, 50A nicht als separate Vorrichtung 50, 50A vorgesehen ist, sondern Teil der Schweißsteuerung 10 ist.

Mit der Schweißsteuerung 10 ist eine simulative Reglerparametrierung möglich. Die Reglerparametrierung kann für einen Kraftregler und/oder einen Drehzahlregler erfolgen. Insbesondere kann das Kraftregelmodul 12 mindestens einen Drehzahlsollwert n_S an die Antriebseinrichtung 26 des Schweißwerkzeugs 21 ausgeben, um den Antrieb des Schweißwerkzeugs 21 zum Aufbringen der Kraft $F_S(t)$, $F_{S\_ACT}$ mit einem Drehzahlregler der Antriebseinrichtung 26 zu regeln. Alternativ ist die Regelung einer anderen physikalischen Größe möglich.

Die Simulation der Reglerparametrierung kann mit MATLAB Simulink unterstützt werden.

Das Schweißwerkzeug 21 muss nicht als Schweißzange ausgeführt sein, sondern kann nur eine Schweißelektrode 22 oder 23 usw. aufweisen.

Optional kann auf beiden Seiten, also nicht nur bei der Elektrode 22 oder nur bei der Elektrode 23, sondern über die beiden Elektroden 22, 23 eine entsprechende Einleitung von Kräften Fs erfolgen.

Möglich ist außerdem, einen anderen Regler 121 als einen PD-Regler zu verwenden. In diesem Fall werden andere Reglerparameter des Reglers 121 geändert, um die Schwingungen der Kraft Fs zu vermeiden. Hierbei ist es alternativ möglich, dass mehrere Regler 121 hintereinandergeschaltet sind. Wird beispielsweise ein Zweipunktregler anstelle eines PD-Reglers verwendet, würde eine weniger dynamische und regelungstechnisch weniger vorteilhafte Lösung als die zuvor beschriebene Lösung mit PD-Regler geschaffen. Hier müssten dann die für den Zweipunktregler passenden Parameter angepasst werden, um Schwingungen zu vermeiden.

## Patentansprüche

1. Vorrichtung (50; 50A) für eine Schweißsteuerung (10), mit

    einem Ermittlungsmodul (51) zur Ermittlung mindestens eines Schweißwerkzeugparameters ($A_B$, M_B), der von einem Antrieb des Schweißwerkzeugs (21) relativ zu dem mindestens einen Bauteil (5, 6) bei einem Schweißvorgang mit dem Schweißwerkzeug (21) abhängig ist, wobei das Schweißwerkzeug (21) ein Widerstandsschweißwerkzeug ist, das als Schweißzange mit zwei Elektroden (22, 23) ausgestaltet ist, und

    einem Kraftwert-Erzeugungsmodul (52) zur Erzeugung, aus einem von dem Ermittlungsmodul (51) ermittelten Schweißwerkzeugparameter ($A_B$, M_B), einer Ist-Kraft ($Fs(t)$; $F_{S\_ACT}$), die bei dem Schweißvorgang mit dem Schweißwerkzeug (21) auftritt,

    wobei der mindestens eine Schweißwerkzeugparameter eine Armaufbiegung ($A_B$) des Schweißwerkzeugs (21) ist, die eine Funktion der Ist-Lage ($L_{ACT}$) der mindestens einen Elektrode (22, 23) des Schweißwerkzeugs (21) ist, und/oder

    wobei der mindestens eine Schweißwerkzeugparameter ein Beschleunigungsmoment (M_B) der mindestens einen Elektrode (22, 23) des Schweißwerkzeugs (21) ist, und das Beschleunigungsmoment (M_B) eine Funktion der Ist-Drehzahl ($n\_ACT$) der Antriebseinrichtung (26) zum Antrieb der mindestens einen Elektrode (22, 23) des Schweißwerkzeugs (21) ist,

    wobei das Kraftwert-Erzeugungsmodul (52) ausgestaltet ist, die Ist-Kraft ($F_S(t)$; $F_{S\_ACT}$) mit einem Modell (511) des Schweißwerkzeugs (21) zu erzeugen

    wobei das Modell (511) das Schweißwerkzeug (21) als Feder (211, 212, 213) modelliert und mindestens einen die Feder (211, 212, 213) bestimmenden Federparameter (k_E, Tt) aufweist, und

    wobei das Kraftwert-Erzeugungsmodul (52) ausgestaltet ist, zur Erzeugung der Ist-Kraft ($F_S(t)$; $F_{S\_ACT}$) eine Änderung der Kraft ($Fs(t)$; $F_{S\_ACT}$) zu berücksichtigen, die bei einem Schweißvorgang mit dem Schweißwerkzeug (21) durch Störgrößen bei der Ermittlung der zeitlich veränderlichen Ist-Lage ($L_{ACT}$) mindestens einer der Elektroden (22, 23) beim Schweißvorgang auftritt).

2. Vorrichtung (50; 50A) nach Anspruch 1, wobei der mindestens eine Federparameter (k_E, Tt) eine Ersatzfederkonstante (k_E) ist, die mindestens eine Federkonstante (k_F1, kF2) in Bezug auf die mechanischen Eigenschaften des Schweißwerkzeugs (21) und eine Federkonstante (k_F3) in Bezug auf die Eigenschaften des mindestens einen zu schweißenden Bauteils (5, 6) aufweist.

3. Vorrichtung (50; 50A) nach Anspruch 1 oder 2, wobei der mindestens eine Federparameter (k_E, Tt) eine Totzeit (Tt) ist, die nach Beaufschlagung des Schweißwerkzeugs (21) mit der Kraft ($F_S(t)$; $F_{S\_ACT}$) den Kraftaufbau zum Herstellen der Schweißverbindung (7) verzögert.

4. Vorrichtung (50; 50A) nach einem der vorangehenden Ansprüche, wobei das Kraftwert-Erzeugungsmodul (52) ausgestaltet ist, eine Änderung des mindestens einen Federparameters (k_E, Tt) bei einem Schweißvorgang zu berücksichtigen.

5. Vorrichtung (50; 50A) nach Anspruch 4, wobei das Modell (511) den mindestens einen Federparameter (k_E, Tt) abhängig von dem Fortschritt des Schweißvorgangs ändert.

6. Vorrichtung (50; 50A) nach einem der vorangehenden Ansprüche, wobei das Kraftwert-Erzeugungsmodul (52) ausgestaltet ist, zur Erzeugung der Ist-Kraft ($F_S(t)$; $F_{S\_ACT}$) die Änderung der Kraft ($F_S(t)$; $F_{S\_ACT}$) zu berücksichtigen, die bei einem Schweißvorgang mit dem Schweißwerkzeug (21) auftritt, und wobei die Änderung der Kraft ($F_S(t)$; $F_{S\_ACT}$) auftritt aufgrund von Wärmeausdehnung des mindestens einen Bauteils (5, 6) und/oder aufgrund von Einsinken der mindestens einen Elektrode (22, 23) an einer aufgeschmolzenen Stelle in das mindestens eine Bauteil (5, 6) und/oder aufgrund von Schweißspritzern (8).

7. Schweißsteuerung (10) für ein Schweißwerkzeug (21), mit

   einem Kraftregelmodul (12) zum Regeln eines Verlaufs einer Kraft ($F_S(t)$; $F_{S\_ACT}$), welche mindestens eine Elektrode (22, 23) eines Schweißwerkzeugs (21) beim Herstellen einer Schweißverbindung (7) auf mindestens ein Bauteil (5, 6) ausübt, und
   einer Vorrichtung (50; 50A) nach einem der vorangehenden Ansprüche,
   wobei das Kraftregelmodul (12) mit der Vorrichtung (50; 50A) derart verbunden ist, dass das Kraftregelmodul (12) die von der Vorrichtung (50; 50A) erzeugte Ist-Kraft (Fs(t); $F_{S\_ACT}$) für das Regeln des Verlaufs der Kraft ($F_S(t)$; $F_{S\_ACT}$) verwendet.

8. Schweißsteuerung (10) nach Anspruch 7,

   wobei die Vorrichtung (50; 50A) ausgestaltet ist, eine Differenz zwischen Ist-Werten der Kraft ($F_S(t)$; $F_{S\_ACT}$) zu ermitteln, die bei einem Schweißvorgang mit dem Schweißwerkzeug (21) von dem Ermittlungsmodul (51) für unterschiedliche Schweißwerkzeugparameter ($A_B$, M_B) für dieselbe Zeit (t) erzeugt wurden, und
   wobei die Vorrichtung (50; 50A) ausgestaltet ist, der Schweißsteuerung (10) mitzuteilen, dass ein Schweißvorgang abzubrechen ist, wenn die ermittelte Differenz zu groß ist.

9. Schweißsteuerung (10) nach Anspruch 7 oder 8,

   zudem mit einem Einstellmodul (11) zur Auswertung der Regelung des Kraftregelmoduls (12),
   wobei das Einstellmodul (11) ausgestaltet ist, das Schweißwerkzeug (21) als Feder (211, 212, 213) zu modellieren und mindestens einen Reglerparameter (120) des Kraftregelmoduls (12) auf der Grundlage von mindestens einem die Feder (211, 212, 213) bestimmenden Parameter (k_E, Tt) einzustellen.

10. Schweißanlage (2), mit

    einem Schweißwerkzeug (21), das mindestens eine Elektrode (22, 23) zum Herstellen einer Schweißverbindung (7) an mindestens einem Bauteil (5, 6) aufweist,
    einer Schweißsteuerung (10) zur Steuerung eines Herstellens einer Schweißverbindung (7) mit dem Schweißwerkzeug (21) nach einem der Ansprüche 7 bis 9.

11. Schweißanlage (2) nach Anspruch 10, zudem mit einer Vorrichtung (20) zum Führen des Schweißwerkzeugs (21), wobei die Vorrichtung (20) als Roboter ausgestaltet ist.

12. Verfahren zur Erzeugung von Kraftwerten bei der Steuerung eines Schweißwerkzeugs (21), wobei das Schweißwerkzeug (21) ein Widerstandsschweißwerkzeug ist, das als Schweißzange mit zwei Elektroden (22, 23) ausgestaltet ist, wobei das Verfahren mit einer Vorrichtung (50; 50A) für eine Schweißsteuerung (10) ausgeführt wird und die Schritte aufweist

    Ermitteln (S4), mit einem Ermittlungsmodul (51), mindestens eines Schweißwerkzeugparameters ($A_B$, M_B), der von einem Antrieb des Schweißwerkzeugs (21) relativ zu dem mindestens einen Bauteil (5, 6) bei einem Schweißvorgang mit dem Schweißwerkzeug (21) abhängig ist, und
    Erzeugen (S5), mit einem Kraftwert-Erzeugungsmodul (52), aus einem von dem Ermittlungsmodul (51) ermittelten Schweißwerkzeugparameter ($A_B$, M_B), einer Ist-Kraft ($F_S(t)$; $F_{S\_ACT}$), die bei dem Schweißvorgang mit dem Schweißwerkzeug (21) auftritt,

wobei der mindestens eine Schweißwerkzeugparameter bei dem Schritt des Erzeugens (S5) eine Armaufbiegung ($A_B$) des Schweißwerkzeugs (21) ist, die eine Funktion der Ist-Lage ($L_{ACT}$) der mindestens einen Elektrode (22, 23) des Schweißwerkzeugs (21) ist, und/oder

wobei der mindestens eine Schweißwerkzeugparameter bei dem Schritt des Erzeugens (S5) ein Beschleunigungsmoment (M_B) der mindestens einen Elektrode (22, 23) des Schweißwerkzeugs (21) ist, und das Beschleunigungsmoment (M_B) eine Funktion der Ist-Drehzahl ($n_{\_ACT}$) der Antriebseinrichtung (26) zum Antrieb der mindestens einen Elektrode (22, 23) des Schweißwerkzeugs (21) ist,

wobei das Kraftwert-Erzeugungsmodul (52) die Ist-Kraft (Fs(t); $F_{S\_ACT}$) mit einem Modell (511) des Schweißwerkzeugs (21) erzeugt,

wobei das Modell (511) das Schweißwerkzeug (21) als Feder (211, 212, 213) modelliert und mindestens einen die Feder (211, 212, 213) bestimmenden Federparameter (k_E, Tt) aufweist, und

wobei das Kraftwert-Erzeugungsmodul (52) zur Erzeugung der Ist-Kraft ($F_S(t)$; $F_{S\_ACT}$) eine Änderung der Kraft ($F_S(t)$; $F_{S\_ACT}$) berücksichtigt, die bei einem Schweißvorgang mit dem Schweißwerkzeug (21) durch Störgrößen bei der Ermittlung der zeitlich veränderlichen Ist-Lage ($L_{ACT}$) mindestens einer der Elektroden (22, 23) beim Schweißvorgang auftritt).

**Claims**

1. Apparatus (50; 50A) for a welding control (10), comprising

   a determination module (51) for determining at least one welding tool parameter ($A_B$, M_B) which depends on a driving of the welding tool (21) relative to the at least one component (5, 6) during a welding procedure using the welding tool (21), the welding tool (21) being a resistance welding tool designed as an electrode holder with two electrodes (22, 23), and

   a force value generation module (52) for generating, from a welding tool parameter ($A_B$, M_B) determined by the determination module (51), an actual force ($F_S(t)$; $F_{S\_ACT}$) that arises during the welding procedure using the welding tool (21),

   wherein the at least one welding tool parameter is a welding tool (21) arm bend ($A_B$) which is a function of the actual position ($L_{ACT}$) of the at least one electrode (22, 23) of the welding tool (21), and/or

   wherein the at least one welding tool parameter is an acceleration torque (M_B) of the at least one electrode (22, 23) of the welding tool (21) and the acceleration torque (M_B) is a function of the actual rotational speed ($n_{\_ACT}$) of the drive device (26) for driving the at least one electrode (22, 23) of the welding tool (21),

   wherein the force value generation module (52) is designed to generate the actual force ($F_S(t)$; $F_{S\_ACT}$) using a model (511) of the welding tool (21),

   wherein the model (511) models the welding tool (21) as a spring (211, 212, 213) and has at least one spring parameter (k_E, Tt) defining the spring (211, 212, 213), and

   wherein the force value generation module (52) is designed, for the purpose of generating the actual force ($F_S(t)$; $F_{S\_ACT}$), to give due consideration to a change in the force ($F_S(t)$; $F_{S\_ACT}$) which arises during a welding procedure with the welding tool (21) as a result of errors within the determination of the time-varying actual position ($L_{ACT}$) of at least one of the electrodes (22, 23) during the welding procedure.

2. Apparatus (50; 50A) according to Claim 1, wherein the at least one spring parameter (k_E, Tt) is an equivalent spring constant (k_E), which has at least a spring constant (k_F1, kF2) with respect to the mechanical properties of the welding tool (21) and a spring constant (k_F3) with respect to the properties of the at least one component (5, 6) to be welded.

3. Apparatus (50; 50A) according to Claim 1 or 2, wherein the at least one spring parameter (k_E, Tt) is a dead time (Tt), which delays the force buildup for producing the welded connection (7) after application of the force ($F_S(t)$; $F_{S\_ACT}$) to the welding tool (21).

4. Apparatus (50; 50A) according to any of the preceding claims, wherein the force value generation module (52) is designed to give due consideration to a change in the at least one spring parameter (k_E, Tt) during a welding procedure.

5. Apparatus (50; 50A) according to Claim 4, wherein the model (511) modifies the at least one spring parameter (k_E, Tt) on the basis of the progress of the welding procedure.

**EP 3 854 509 B1**

6. Apparatus (50; 50A) according to any of the preceding claims, wherein the force value generation module (52) is designed, for the purpose of generating the actual force ($F_S(t)$; $F_{S\_ACT}$), to give due consideration to the change in the force ($F_S(t)$; $F_{S\_ACT}$) which arises during a welding procedure with the welding tool (21), and wherein the change in the force ($F_S(t)$; $F_{S\_ACT}$) arises on account of a thermal expansion of the at least one component (5, 6) and/or on account of the at least one electrode (22, 23) sinking into the at least one component (5, 6) at a melted site and/or on account of weld spatter (8).

7. Welding control (10) for a welding tool (21), comprising

a force control module (12) for closed-loop control of a progression of a force ($F_S(t)$; $F_{S\_ACT}$), which at least one electrode (22, 23) of a welding tool (21) exerts on at least one component (5, 6) when producing a welded connection (7), and
an apparatus (50; 50A) according to any of the preceding claims,
wherein the force control module (12) is connected to the apparatus (50; 50A) such that the force control module (12) uses the actual force ($F_S(t)$; $F_{S\_ACT}$) generated by the apparatus (50; 50A) for controlling the progression of the force ($F_S(t)$; $F_{S\_ACT}$).

8. Welding control (10) according to Claim 7,

wherein the apparatus (50; 50A) is designed to determine a difference between actual values of the force ($F_S(t)$; $F_{S\_ACT}$) which were generated for different welding tool parameters ($A_B$, M_B) for the same time (t) by the determination module (51) during a welding procedure with the welding tool (21), and
wherein the apparatus (50; 50A) is designed to signal to the welding control (10) that a welding procedure should be discontinued if the determined difference is too large.

9. Welding control (10) according to Claim 7 or 8, also comprising a setting module (11) for evaluating the closed-loop control of the force control module (12), wherein the setting module (11) is designed to model the welding tool (21) as a spring (211, 212, 213) and to set at least one controller parameter (120) of the force control module (12) on the basis of at least one parameter (k_E, Tt) defining the spring (211, 212, 213).

10. Welding installation (2), comprising

a welding tool (21), which has at least one electrode (22, 23) for producing a welded connection (7) on at least one component (5, 6),
a welding control (10) for controlling a production of a welded connection (7) using the welding tool (21) according to any of Claims 7 to 9.

11. Welding installation (2) according to Claim 10, also comprising an apparatus (20) for guiding the welding tool (21), wherein the apparatus (20) is designed as a robot.

12. Method for generating force values during the control of a welding tool (21), wherein the welding tool (21) is a resistance welding tool which is designed as an electrode holder with two electrodes (22, 23), wherein the method is carried out using an apparatus (50; 50A) for a welding control (10) and includes the steps of using a determination module (51) to determine (S4) at least one welding tool parameter ($A_B$, M_B) which depends on a driving of the welding tool (21) relative to the at least one component (5, 6) during a welding procedure with the welding tool (21), and

using a force value generation module (52) to generate (S5), from a welding tool parameter ($A_B$, M_B) determined by the determination module (51), an actual force ($F_S(t)$; $F_{S\_ACT}$) which arises during the welding procedure with the welding tool (21),
wherein the at least one welding tool parameter during the generation step (S5) is a welding tool (21) arm bend ($A_B$) which is a function of the actual position ($L_{ACT}$) of the at least one electrode (22, 23) of the welding tool (21), and/or
wherein the at least one welding tool parameter during the generation step (S5) is an acceleration torque (M_B) of the at least one electrode (22, 23) of the welding tool (21) and the acceleration torque (M_B) is a function of the actual rotational speed ($n_{\_ACT}$) of the drive device (26) for driving the at least one electrode (22, 23) of the welding tool (21),
wherein the force value generation module (52) generates the actual force ($F_S(t)$; $F_{S\_ACT}$) using a model (511) of the welding tool (21),

**14**

wherein the model (511) models the welding tool (21) as a spring (211, 212, 213) and has at least one spring parameter (k_E, Tt) defining the spring (211, 212, 213), and

wherein the force value generation module (52), for the purpose of generating the actual force ($F_S(t)$; $F_{S\_ACT}$), gives due consideration to a change in the force ($F_S(t)$; $F_{S\_ACT}$) which arises during a welding procedure with the welding tool (21) as a result of errors within the determination of the time-varying actual position ($L_{ACT}$) of at least one of the electrodes (22, 23) during the welding procedure.

## Revendications

1. Dispositif (50 ; 50A) de commande de soudage (10), comprenant

   un module d'établissement (51) pour établir au moins un paramètre d'outil de soudage ($A_B$, M_B) qui dépend d'un entraînement de l'outil de soudage (21) par rapport à au moins un composant (5, 6) lors d'un processus de soudage avec l'outil de soudage (21), dans lequel l'outil de soudage (21) est un outil de soudage par résistance qui est configuré comme une pince à souder avec deux électrodes (22, 23), et

   un module de génération de valeur de force (52) pour générer à partir d'un paramètre d'outil de soudage ($A_B$, M_B) établi par le module d'établissement (51) une force réelle ($F_S(t)$ ; $F_{S\_ACT}$) qui se produit lors du processus de soudage avec l'outil de soudage (21),

   dans lequel ledit au moins un paramètre d'outil de soudage est une longueur utile des bras ($A_B$) de l'outil de soudage (21) qui est une fonction de la position réelle ($L_{ACT}$) de ladite au moins une électrode (22, 23) de l'outil de soudage, et/ou

   dans lequel ledit au moins un paramètre d'outil de soudage est un couple d'accélération (M_B) de ladite au moins une électrode (22, 23) de l'outil de soudage (21), et le couple d'accélération (M_B) est une fonction de la vitesse de rotation réelle ($n_{\_ACT}$) du dispositif d'entraînement (26) pour entraîner ladite au moins une électrode (22, 23) de l'outil de soudage (21),

   dans lequel le module de génération de valeur de force (52) est configuré pour générer la force réelle ($F_S(t)$ ; $F_{S\_ACT}$) par un modèle (511) de l'outil de soudage (21), dans lequel le modèle (511) modélise l'outil de soudage (21) comme un ressort (211, 212, 213) et présente au moins un paramètre de ressort (k_E, Tt) déterminant le ressort (211, 212, 213), et

   dans lequel, pour générer la force réelle ($F_S(t)$ ; $F_{S\_ACT}$), le module de génération de valeur de force (52) est configuré pour prendre en compte une modification de la force ($F_S(t)$ ; $F_{S\_ACT}$) qui se produit lors d'un processus de soudage avec l'outil de soudage (21) en raison de perturbations lors de l'établissement de la position réelle ($L_{ACT}$) variable dans le temps d'au moins l'une des électrodes (22, 23) lors du processus de soudage.

2. Dispositif (50 ; 50A) selon la revendication 1, dans lequel ledit au moins un paramètre de ressort (k_E, Tt) est une constante de rappel fictive (k_E) qui présente au moins une constante de rappel (k_F1, kF2) concernant les propriétés mécaniques de l'outil de soudage (21) et une constante de rappel (k_F3) concernant les propriétés dudit au moins un composant (5, 6) à souder.

3. Dispositif (50 ; 50A) selon la revendication 1 ou 2, dans lequel ledit au moins un paramètre de ressort (k_E, Tt) est un temps mort (Tt) qui retarde le développement de la force pour créer l'assemblage soudé (7) après que l'outil de soudage (21) a été soumis à la force ($F_S(t)$ ; $F_{S\_ACT}$).

4. Dispositif (50 ; 50A) selon l'une quelconque des revendications précédentes, dans lequel le module de génération de valeur de force (52) est configuré pour tenir compte dudit au moins un paramètre de ressort (k_E, Tt) lors d'un processus de soudage.

5. Dispositif (50 ; 50A) selon la revendication 4, dans lequel le modèle (511) modifie ledit au moins un paramètre de ressort (k_E, Tt) en fonction de l'avancement du processus de soudage.

6. Dispositif (50 ; 50A) selon l'une quelconque des revendications précédentes, dans lequel, pour générer la force réelle ($F_S(t)$ ; $F_{S\_ACT}$), le module de génération de valeur de force (52) est configuré pour tenir compte de la modification de la force ($F_S(t)$ ; $F_{S\_ACT}$) qui se produit lors d'un processus de soudage avec l'outil de soudage (21), et dans lequel la modification de la force ($F_S(t)$ ; $F_{S\_ACT}$) se produit en raison d'une dilatation thermique dudit au moins un composant (5, 6) et/ou en raison d'un affaissement de ladite au moins une électrode (22, 23) à l'endroit fondu dans ledit au moins un composant (5, 6) et/ou en raison d'éclaboussures de soudage (8).

**7.** Commande de soudage (10) pour un outil de soudage (21), comprenant

un module de régulation de force (12) pour réguler une courbe d'une force ($F_S(t)$ ; $F_{S\_ACT}$) exercée par au moins une électrode (22, 23) d'un outil de soudage (21) sur au moins un composant (5, 6) lors de la création d'un assemblage soudé (7), et
un dispositif (50 ; 50A) selon l'une quelconque des revendications précédentes,
dans laquelle le module de régulation de force (12) est relié au dispositif (50 ; 50A) de telle sorte que le module de régulation de force (12) utilise la force réelle ($F_S(t)$ ; $F_{S\_ACT}$) générée par le dispositif (50 ; 50A) pour réguler la courbe de la force ($F_S(t)$ ; $F_{S\_ACT}$).

**8.** Commande de soudage (10) selon la revendication 7, dans laquelle le dispositif (50 ; 50A) est configuré pour établir une différence entre les valeurs réelles de la force ($F_S(t)$; $F_{S\_ACT}$) qui ont été générées lors d'un processus de soudage avec l'outil de soudage (21) par le module d'établissement (51) pour différents paramètres d'outil de soudage ($A_B$, M_B) pour la même période (t), et dans laquelle le dispositif (50 ; 50A) est configuré pour communiquer à la commande de soudage (10) qu'un processus de soudage doit être abandonné lorsque la différence établie est trop importante.

**9.** Commande de soudage (10) selon la revendication 7 ou 8,

comprenant en outre un module de réglage (11) pour évaluer la régulation du module de régulation de force (12), dans laquelle le module de réglage (11) est configuré pour modéliser l'outil de soudage (21) comme un ressort (211, 212, 213) et pour régler au moins un paramètre de régulateur (120) du module de régulation de force (12) sur la base d'au moins un paramètre (k_E, Tt) déterminant le ressort (211, 212, 213).

**10.** Installation de soudage (2), comprenant

un outil de soudage (21) qui présente au moins une électrode (22, 23) pour créer un assemblage soudé (7) au niveau d'au moins un composant (5, 6),
une commande de soudage (10) pour commander une création d'un assemblage soudé (7) avec l'outil de soudage (21) selon l'une quelconque des revendications 7 à 9.

**11.** Installation de soudage (2) selon la revendication 10, comprenant en outre un dispositif (20) pour guider l'outil de soudage (21), le dispositif (20) étant configuré comme un robot.

**12.** Procédé permettant de générer des valeurs de force lors de la commande d'un outil de soudage (21), dans lequel l'outil de soudage (21) est un outil de soudage par résistance qui est configuré comme une pince à souder avec deux électrodes (22, 23), le procédé étant effectué par un dispositif (50 ; 50A) de commande de soudage (10) et présentant les étapes consistant à

établir (S4), par un module d'établissement (51), au moins un paramètre d'outil de soudage ($A_B$, M_B) qui dépend d'un entraînement de l'outil de soudage (21) par rapport audit au moins un composant (5, 6) lors d'un processus de soudage avec l'outil de soudage (21), et
générer (S5), par un module de génération de valeur de force (52), à partir d'un paramètre d'outil de soudage ($A_B$, M_B) établi par le module d'établissement (51), une force réelle ($F_S(t)$ ; $F_{S\_ACT}$) qui se produit lors du processus de soudage avec l'outil de soudage (21),
dans lequel ledit au moins un paramètre d'outil de soudage à l'étape de génération (S5) est une longueur utile des bras ($A_B$) de l'outil de soudage (21) qui est une fonction de la position réelle ($L_{ACT}$) de ladite au moins une électrode (22, 23) de l'outil de soudage, et/ou dans lequel ledit au moins un paramètre d'outil de soudage à l'étape de génération (S5) est un couple d'accélération (M_B) de ladite au moins une électrode (22, 23) de l'outil de soudage (21), et le couple d'accélération (M_B) est une fonction de la vitesse de rotation réelle ($n_{\_ACT}$) du dispositif d'entraînement (26) pour entraîner ladite au moins une électrode (22, 23) de l'outil de soudage (21),
dans lequel le module de génération de valeur de force (52) génère la force réelle ($F_S(t)$ ; $F_{S\_ACT}$) par un modèle (511) de l'outil de soudage (21),
dans lequel le modèle (511) modélise l'outil de soudage (21) comme un ressort (211, 212, 213) et présente au moins un paramètre de ressort (k_E, Tt) déterminant le ressort (211, 212, 213), et
dans lequel, pour générer la force réelle ($F_S(t)$ ; $F_{S\_ACT}$), le module de génération de valeur de force (52) prend en compte une modification de la force ($F_S(t)$ ; $F_{S\_ACT}$) qui se produit lors d'un processus de soudage avec l'outil de soudage (21) en raison de perturbations lors de l'établissement de la position réelle ($L_{ACT}$) variable dans le temps d'au moins l'une des électrodes (22, 23) lors du processus de soudage.

FIG. 1

FIG. 2

FIG. 3

210

211

k_F1

213

k_F3

k_E

212

k_F2

## FIG. 4

$F_{S\_ACT}$

3000

2500

2000

1500

1000

500

0

5     10     10     20     25     t

Tt

## FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP H1094882 A
- JP H11104849 A
- DE 102012000462 A1
- EP 3412397 A